# EUROPÄISCHE PATENTANMELDUNG

(11) **EP 3 644 517 A1**
(43) Veröffentlichungstag der Anmeldung: **29.04.2020**
(21) Anmeldenummer: 19205166.2
(22) Anmeldetag: 24.10.2019
(51) Int. Cl.: H04B 1/16, G01K 1/02, G01K 7/32

(54) **EMPFANGSSEITIGE BESTIMMUNG VON UMWELTPARAMETERN EINES DATENSENDERS**

(30) Priorität: 24.10.2018 DE 102018218247
(71) Anmelder: FRAUNHOFER-GESELLSCHAFT zur Förderung der angewandten Forschung e.V., 80686 München (DE); Diehl Metering GmbH, 91522 Ansbach (DE)
(72) Erfinder: Kilian, Gerd, 91058 Erlangen (DE); Bernhard, Josef, 91058 Erlangen (DE); Wechsler, Johannes, 91058 Erlangen (DE); Kneißl, Jakob, 91058 Erlangen (DE); Soller, Dominik, 91058 Erlangen (DE); Psiuk, Rafael, 90765 Fürth (DE); Kauppert, Thomas, 90455 Nürnberg (DE); Petkov, Hristo, 90425 Nürnberg (DE); Mzyk, Raphael, 91126 Kammerstein (DE)
(74) Vertreter: Schlenker, Julian

(57) **Zusammenfassung**

Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers des Datensenders abhängig ist, wobei der Datenempfänger ausgebildet ist, um einen Signalparameter des Signals zu ermitteln, und um basierend auf dem Signalparameter einen Umweltparameter zu ermitteln, dem der Taktgeber des Datensenders oder das Signal ausgesetzt ist.

## Beschreibung

Ausführungsbeispiele der vorliegenden Erfindung beziehen auf einen Datenempfänger, einen Datensender sowie ein Kommunikationssystem mit einem Datensender und einem Datenempfänger, und im speziellen, auf eine Bestimmung von Umgebungsbedingungen (Umweltparametern) des Datensenders auf Seiten des Datenempfängers.

Herkömmlicherweise werden zur Bestimmung von Umweltparametern, wie z.B. Temperatur, Druck, Luftfeuchtigkeit, usw., Sensorknoten eingesetzt, die einen Sensor für den zu bestimmenden Umweltparameter aufweisen. Der mit dem Sensor bestimmte Sensorwert, der den Umweltparameter in der Umgebung des Sensorknotens beschreibt, wird von dem Sensorknoten in gewissen Zeitabständen (z.B. regelmäßig oder periodisch) oder auf Anfrage mittels eines Signals, das den Sensorwert und ggf. weitere Nutzdaten aufweist, zu einem Datenempfänger, wie z.B. einer Basisstation im Falle eines Sensorsystems mit einer großen Anzahl an Sensorknoten, übertragen.

Aus Kostengründen sind die in den Sensorknoten eingesetzten Sensoren jedoch meist sehr ungenau. Zudem ist es erforderlich weitere Sensorknoten vorzusehen, falls die vorhandenen Sensorknoten keinen Sensor für den gewünschten Umweltparameter aufweisen.

Der vorliegenden Erfindung liegt die Aufgabe zugrunde, die bestehende Situation zu verbessern.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers [z.B. eines Frequenzgebers, wie z.B. Oszillators bzw. Quarzes] des Datensenders abhängig ist, wobei der Datenempfänger ausgebildet ist, um einen Signalparameter [z.B. eine Signaleigenschaft] des Signals zu ermitteln [z.B. auszuwerten], und um basierend auf dem Signalparameter einen Umweltparameter [z.B. eine Temperatur oder Temperaturänderung] zu ermitteln [z.B. zu schätzen], dem der Taktgeber des Datensenders oder das Signal ausgesetzt ist.

Der vorliegenden Erfindung liegt die Idee zugrunde, Umweltparameter [z.B. Temperatur, Druck, Luftfeuchtigkeit oder eine Änderung derselben] durch Auswertung von Empfangsparametern zu bestimmen. Die Signalparameter des empfangen Signals (Empfangsparameter) hängen von einem Taktsignal eines Taktgebers [z.B. einer Frequenz eines Frequenzgebers] ab, basierend auf dem der Datensender das Signal erzeugt, wobei das von dem Taktgeber des Datensenders bereitgestellte Taktsignal von den Umweltparametern in der Umgebung des Datensenders abhängig ist.

Bei Ausführungsbeispielen kann der Signalparameter von einem Modulationsinhalt des Signals unabhängig sein.

Bei Ausführungsbeispielen kann das Signal ein digital moduliertes Signal sein, wobei der Datenempfänger ausgebildet sein kann, um einen analogen Signalparameter [z.B. eine analoge Signaleigenschaft] des digital modulierten Signals zu ermitteln.

Beispielsweise kann der Signalparameter von einem Modulationsinhalt des digital modulierten Signals unabhängig sein.

Bei Ausführungsbeispielen kann der Datenempfänger ausgebildet sein, um für die Ermittlung des Signalparameters bekannte Symbole [z.B. Pilotsymbole] in dem Signal zu verwenden.

Bei Ausführungsbeispielen können die bekannten Symbole in Gruppen aufgeteilt sein, wobei sich die Gruppen von Symbolen an verschiedenen Stellen des Signals [z.B. am Anfang und am Ende] befinden können.

Bei Ausführungsbeispielen kann der Datenempfänger ausgebildet sein, um für die Ermittlung des Signalparameters mindestens 4 bekannte Symbole, vorzugsweise 20 bekannte Symbole und besonders vorzugsweise 40 bekannte Symbole zu verwenden.

Bei Ausführungsbeispielen kann das Signal eine Mehrzahl von Sub-Datenpaketen aufweisen, wobei die bekannten Symbole über mehrere Sub-Datenpakete verteilt sind.

Bei Ausführungsbeispielen kann der Datenempfänger ausgebildet sein, um für die Ermittlung des Signalparameters keine bekannten Symbole zu verwenden.

Bei Ausführungsbeispielen kann das Signal neben einer modulierten Primärinformation [z.B. eine ID des Datensenders, eine Synchronisationssequenz, Nutzdaten und/oder Dummy-Daten] eine Information über den Umweltparameter in dem Signalparameter aufweisen.

Bei Ausführungsbeispielen kann das Signal in gewissen Zeitabständen [z.B. gleichen oder ungleichen Zeitabständen] ausgesendet werden, wobei eine Aussendung des Signals oder eine echte Teilmenge der Aussendungen des Signals zusätzlich eine Information über den Umweltparameter [z.B. eine sensorisch bestimmte Version des Umweltparameters] in der modulierten Primärinformation aufweisen kann, wobei der Datenempfänger ausgebildet sein kann, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren.

Beispielsweise kann der Datenempfänger ausgebildet sein, um das Signal in einer Mehrzahl von Zeitabschnitten einer Abfolge von Zeitabschnitten zu empfangen, wobei das in einer ersten Teilmenge von Zeitabschnitten der Abfolge von Zeitabschnitten empfangene Signal zusätzlich eine Information über den Umweltparameter [z.B. eine sensorisch bestimmte Version des Umweltparameters] in der modulierten Primärinformation aufweist, wobei der Datenempfänger ausgebildet ist, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren, wobei das in einer zweiten Teilmenge von Zeitabschnitten der Abfolge von Zeitabschnitten empfangene Signal in der modulierten Primärinformation keine Information über den Umweltparameter enthält, wobei die erste Teilmenge von Zeitabschnitten und die zweite Teilmenge von Zeitabschnitten disjunkt sind.

Bei Ausführungsbeispielen kann die modulierte Primärinformation keine Information über den Umweltparameter enthalten.

Bei Ausführungsbeispielen kann der Datenempfänger ausgebildet sein, um den Umweltparameter basierend auf einer Abbildungsfunktion aus dem Signalparameter zu ermitteln.

Bei Ausführungsbeispielen kann dem Datenempfänger die Abbildungsfunktion bekannt sein.

Bei Ausführungsbeispielen kann der Datenempfänger ausgebildet sein, um die Abbildungsfunktion basierend auf zumindest einer von einem Sensor bestimmten Information über den Umweltparameter zu kalibrieren.

Bei Ausführungsbeispielen kann der Datenempfänger ausgebildet sein, um die Abbildungsfunktion basierend auf zumindest zwei von einem Sensor bestimmten Informationen über den Umweltparameter zu ermitteln.

Bei Ausführungsbeispielen kann der Datenempfänger ausgebildet sein, um die Abbildungsfunktion basierend auf einer Polynomapproximation in Abhängigkeit von den zumindest zwei von dem Sensor bestimmten Informationen über den Umweltparameter zu ermitteln.

Bei Ausführungsbeispielen kann der Datenempfänger ausgebildet sein, um die Abbildungsfunktion basierend auf zumindest einer von einem Sensor bestimmten Information über den Umweltparameter aus einem Satz von Abbildungsfunktionen auszuwählen.

Bei Ausführungsbeispielen kann der Datenempfänger ausgebildet sein, um einen Mittelwert und eine Streuung über zumindest zwei von dem Sensor bestimmten Informationen über den Umweltparameter zu ermitteln, wobei der Datenempfänger ausgebildet sein kann, um die Abbildungsfunktion basierend auf dem Mittelwert und der Streuung aus dem Satz von Abbildungsfunktionen auszuwählen.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] die zumindest eine von dem Sensor bestimmte Information über den Umweltparameter aufweist.

Bei Ausführungsbeispielen kann die Abbildungsfunktion eine Temperaturkurve des Taktgebers des Datensenders sein.

Bei Ausführungsbeispielen kann das Signal in gewissen Zeitabständen [z.B. gleichen oder ungleichen Zeitabständen] ausgesendet werden, wobei der Datenempfänger ausgebildet sein kann, um basierend auf zumindest zwei Aussendungen des Signals zumindest zwei Signalparameter zu ermitteln, wobei der Datenempfänger ausgebildet sein kann, um den Umweltparameter basierend auf den zumindest zwei Signalparametern zu ermitteln.

Bei Ausführungsbeispielen kann der Datenempfänger ausgebildet sein, um die zumindest zwei Signalparameter zu kombinieren [z.B. durch Differenzbildung], um ein kombinierten Signalparameter zu erhalten, wobei der Datenempfänger ausgebildet sein kann, um den Umweltparameter basierend auf dem kombinierten Signalparameter zu ermitteln.

Bei Ausführungsbeispielen kann der Datenempfänger ausgebildet sein, um zumindest zwei Signalparameter [z.B. Frequenz und Modulationsfehler] des Signals zu ermitteln, wobei der Datenempfänger ausgebildet sein kann, um basierend auf den zumindest zwei Signalparametern jeweils einen Umweltparameter [z.B. eine Temperatur oder Temperaturänderung] zu ermitteln [z.B. zu schätzen], dem der Taktgeber des Datensenders oder das Signal ausgesetzt ist.

Beispielsweise kann der Datenempfänger basierend auf den zumindest zwei Signalparametern gleiche Umweltparameter [z.B. Temperaturen oder Temperaturdifferenzen] oder unterschiedliche Umweltparameter [z.B. Temperatur und Druck, oder Temperaturdifferenz und Druckdifferenz] ermitteln.

Bei Ausführungsbeispielen kann der Datenempfänger ausgebildet sein, um die ermittelten Umweltparameter zu kombinieren [z.B. durch Mittelwertbildung], um einen kombinierten Umweltparameter zu erhalten.

Bei Ausführungsbeispielen kann das Signal oder eine Erzeugung des Signals ferner von einem weiteren Taktsignal eines weiteren Taktgebers [z.B. Frequenzgeber und Zeitgeber] des Datensenders abhängig sein, wobei der Datenempfänger ausgebildet sein kann, um zwei Signalparameter des Signals zu ermitteln, und um den Umweltparameter basierend auf den zwei Signalparametern zu ermitteln.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] eine Information über eine Abweichung der zwei Taktgeber des Datensenders aufweist, wobei der Datenempfänger ausgebildet sein kann, um die Ermittlung des Umweltparameters basierend auf der Abweichung der zwei Taktgeber des Datensenders zu kalibrieren.

Beispielsweise kann die Abweichung der zwei Taktgeber des Datensenders die aktuelle Differenz der Frequenzen der zwei Taktgeber angegeben. Zum Beispiel können die beiden Taktgeber [z.B. Quarze] gegeneinander vermessen werden, um einen Wert [z.B. in ppm, wie z.B. 20 ppm] festzustellen, der angibt, um wieviel die beiden Taktgeber auseinanderlaufen. Der Wert kann mitgesendet werden. Der Datenempfänger [z.B. Basisstation] kann die Zeit [Empfangszeitpunkt] und Frequenz [Empfangsfrequenz] schätzen und die Information, um die Quarztemperaturkurven des Zeitquarzes oder des Frequenzquarzes am Knoten zu bestimmen/kalibrieren.

Bei Ausführungsbeispielen kann der Datenempfänger ausgebildet sein, um ein weiteres Signal von einem weiteren Datensender zu empfangen, wobei das weitere Signal oder eine Erzeugung des weiteren Signals von einem Taktsignal eines Taktgebers des weiteren Datensenders abhängig ist, wobei der Datensender und der weitere Datensender im Wesentlichen dem gleichem Umweltparameter ausgesetzt sind [z.B. im gleichen Raum angeordnet sind], wobei der Datenempfänger ausgebildet sein kann, um einen weiteren Signalparameter des weiteren Signals zu ermitteln, und um den Umweltparameter basierend auf dem Signalparameter und dem weiteren Signalparameter zu ermitteln.

Bei Ausführungsbeispielen kann der Datenempfänger ausgebildet sein, um den Signalparameter und den weiteren Signalparameter zu kombinieren, um einen kombinierten Signalparameter zu erhalten, und um den Umweltparameter basierend auf dem kombinierten Signalparameter zu ermitteln.

Bei Ausführungsbeispielen können der Signalparameter und der weitere Signalparameter einzeln die Ermittlung eines relativen Umweltparameters [z.B. Temperaturänderungen] ermöglichen, wobei der Datenempfänger ausgebildet sein kann, um basierend auf dem Signalparameter und dem weiteren Signalparameter in Kombination einen absoluten Umweltparameter zu ermitteln.

Bei Ausführungsbeispielen können der Datensender und der weitere Datensender unterschiedlichen Funksystemen angehörig sein [z.B. Datensender unterschiedlicher Funksysteme sind].

Bei Ausführungsbeispielen kann das Taktsignal des Taktgebers von dem Umweltparameter abhängig sein.

Bei Ausführungsbeispielen kann der Datenempfänger ausgebildet sein, um einen altersbedingten Einfluss des Taktgebers auf den Signalparameter zu kompensieren.

Beispielsweise kann dem Datenempfänger der altersbedingte Einfluss des Taktgebers auf den Signalparameter bekannt sein. Ferner oder alternativ kann der Datenempfänger ausgebildet sein, um den altersbedingten Einfluss des Taktgebers auf den Signalparameter zu ermitteln bzw. zu schätzen, z.B. basierend auf zumindest zwei aufeinanderfolgenden empfangen Signalen des Datensenders.

Bei Ausführungsbeispielen kann der Datenempfänger ausgebildet sein, um einen exemplarstreuungsbedingten Einfluss des Taktgebers auf den Signalparameter zu kompensieren.

Bei Ausführungsbeispielen kann der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben sein.

Bei Ausführungsbeispielen kann der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben ist.

Weitere Ausführungsbeispiele schaffen ein System mit einem Datenempfänger gemäß einem der hierin beschriebenen Ausführungsbeispiele und einem Datensender, wobei der Datensender ausgebildet sein kann, um das Signal zu senden, wobei das Signal oder die Erzeugung des Signals von dem Taktsignal des Taktgebers des Datensenders abhängig ist.

Bei Ausführungsbeispielen kann der Datensender ausgebildet sein, um das Signal in gewissen Zeitabständen [z.B. gleichen oder ungleichen Zeitabständen] zu senden, wobei der Datensender ausgebildet sein kann, um zumindest eine Aussendung des Signals oder eine echte Teilmenge der Aussendungen des Signals mit einer von einem Sensor bestimmten Information über den Umweltparameter zu versehen.

Weitere Ausführungsbeispiele schaffen ein Verfahren. Das Verfahren umfasst einen Schritt des Empfangens eines Signals eines Datensenders, wobei das Signal oder eine Erzeugung des Signals von einem Taktsignal eines Taktgebers [z.B. eines Frequenzgebers, wie z.B. Oszillators bzw. Quarzes] des Datensenders abhängig ist. Das Verfahren umfasst ferner einen Schritt des Ermittelns [z.B. Schätzens] eines Signalparameters [z.B. eine Signaleigenschaft] des empfangenen Signals. Das Verfahren umfasst ferner einen Schritt des Ermitteins eines Umweltparameters [z.B. eine Temperatur oder Temperaturänderung], dem der Taktgeber des Datensenders oder das Signal ausgesetzt ist, basierend auf dem ermittelten Signalparameter.

Bei Ausführungsbeispielen kann ein Einfluss der Umwelt auf den Taktgeber des Datensenders mindestens um den Faktor zwei oder bevorzugt um den Faktor vier größer sein als ein Einfluss der Umwelt auf einen Taktgeber eines Datenempfängers, der das Signal des Datensenders empfängt.

Bei Ausführungsbeispielen kann ein Einfluss der Umwelt auf einen Taktgeber eines Datenempfängers, der das Signals des Datensenders empfängt, mindestens um den Faktor zwei oder bevorzugt um den Faktor vier größer sein als ein Einfluss der Umwelt auf den Taktgeber des Datensenders.

Ausführungsbeispiele der vorliegenden Erfindung werden bezugnehmend auf die beiliegenden Figuren näher beschrieben. Es zeigen:
- Fig. 1: in einem Diagramm eine Abweichung eines hochfrequenten Taktgebers von der Referenzfrequenz in Abhängigkeit von der Temperatur;
- Fig. 2: in einem Diagramm eine Abweichung eines niederfrequenten Taktgebers von der Referenzfrequenz in Abhängigkeit von der Temperatur;
- Fig. 3: zeigt eine schematische Ansicht eines Systems mit einem Datensender und einem Datenempfänger, gemäß einem Ausführungsbeispiel der vorliegenden Erfindung;
- Fig. 4: ein schematisches Blockschaltbild eines Systems mit einem Datenempfänger und einem Datensender, gemäß einem Ausführungsbeispiel der vorliegenden Erfindung;
- Fig. 5: in einem Diagramm Dichtefunktionen von vier unterschiedlichen Normalverteilungen;
- Fig. 6: in einem Diagramm eine schematische Ansicht der datenempfängerseitigen Bestimmung der Quarzkurve des Quarzes des Datensenders, gemäß einem Ausführungsbeispiel der vorliegenden Erfindung;
- Fig. 7: in einem Diagramm Abhängigkeiten von zwei unterschiedlichen Signalparametern von einem Umweltparameter;
- Fig. 8.: ein Flussdiagramm eines Verfahrens zum Ermitteln eines Umweltparameters in der Umgebung eines Datensenders, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

In typischen Funksystemen wird zur Erzeugung von Übertragungssignalen eine Referenzfrequenz benötigt, aus welcher der jeweilige Funkchip bzw. das jeweilige Frontend die notwendigen Takte ableitet. Diese Referenzfrequenz wird typischerweise durch einen Taktgeber, wie z.B. einen Schwingquarz (Quarz) [1], zur Verfügung gestellt. Datensender, wie z.B. Knoten bzw. Sensorknoten, umfassen in der Regel zwei unterschiedliche Taktgeber. Dies kann beispielsweise ein hochfrequenter (HF) Taktgeber, der mit einer Frequenz von mehrere MHz schwingt, und ein niederfrequenter Taktgeber (LF), der üblicherweise mit einer Frequenz von 32768 Hz schwingt, sein. Der hochfrequente Taktgeber ist in der Regel genauer (in Hinsicht auf die Abweichung von der Nominalfrequenz) und stromhungriger. Der niederfrequente ist ungenauer dafür aber sehr stromsparend.

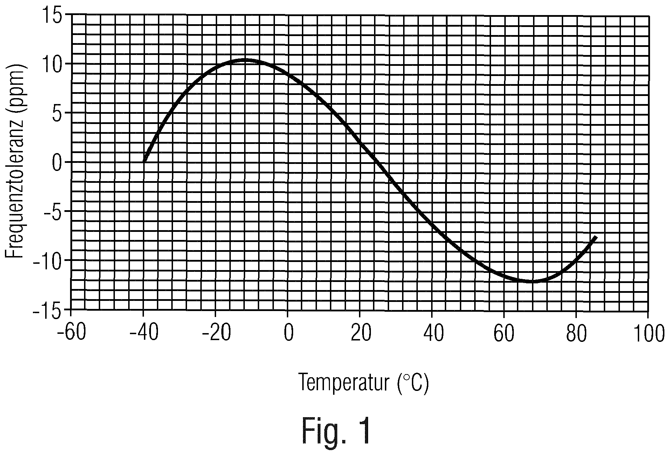

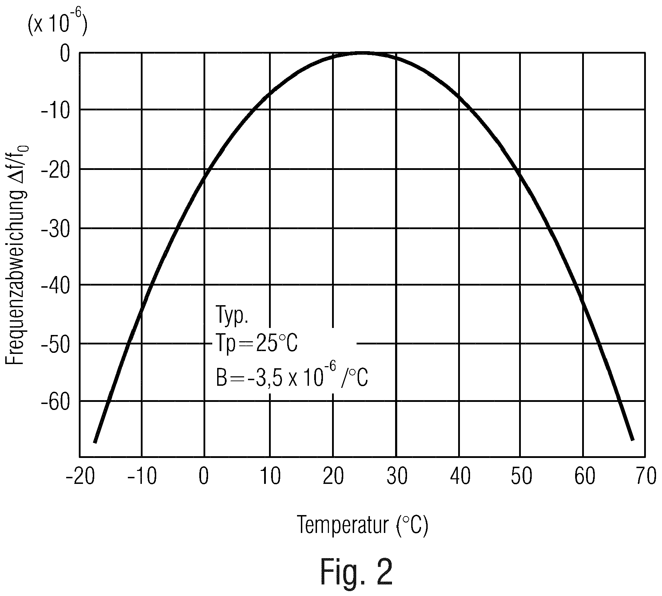

Die von den Taktgebern (Schwingquarzen) zur Verfügung gestellten Referenzfrequenzen sind jedoch typischerweise von Umweltparametern abhängig. In Fig. 1 ist beispielhaft die Abhängigkeit der Referenzfrequenz über der Temperatur für einen beliebigen hochfrequenten Taktgeber zu sehen (Frequenzstabilität eines hochfrequenten Schwingquarzes über der Umgebungstemperatur [2]), während in Fig. 2 beispielhaft die Abhängigkeit der Referenzfrequenz über der Temperatur für einen beliebigen niederfrequenten Taktgeber gezeigt ist (Frequenzstabilität eines niederfrequenten (LF) 32768 kHz Quarzes über der Temperatur [5]). Dabei beschreiben die Ordinaten jeweils die Frequenztoleranz in ppm und die Abszissen jeweils die Temperatur in °C.

Neben der Temperatur gibt es weitere Abhängigkeiten des Taktgebers (Quarzes) von zumindest folgenden Parametern:
- Luftfeuchtigkeit
- Druck
- EM-Strahlung
- Helligkeit
- Vibration/Bewegung

All diese Parameter haben einen Einfluss auf die vom Taktgeber (Schwingquarz) zur Verfügung gestellte Referenzfrequenz. Wird diese Referenzfrequenz für die Erzeugung der Übertragungssignale eingesetzt, wirken sich diese Abhängigkeiten direkt auf das Übertragungssignal und somit auf die Übertragungsparameter (Signaleigenschaften) aus. Folgende Übertragungsparameter sind dabei vor spezieller Bedeutung:
- Sendefrequenz
- Sendezeitpunkt
- Symbolrate
- Modulationsindex (bei Frequenzumtastungsverfahren, wie z.B. FSK oder GMSK)
- Doppler (nur bei Vibration/Bewegung)

Bei der Erzeugung und Abstrahlung eines Funksignals in einem Sender wirken sich somit Umgebungsbedingungen des Senders auf das abgestrahlte Funksignal aus. Insbesondere die Frequenz von Oszillatoren, die in dem Sender als Referenz für Träger- oder Modulationsfrequenzen dient, kann durch Umwelteinflüsse verändert werden. Beispielsweise korreliert bei nicht temperaturkorrigierten Oszillatoren (Quarzen) die Frequenz mit der Umgebungstemperatur. Analoge Effekte können auch für Luftfeuchtigkeit, Elektromagnetische Strahlung, Helligkeit oder Vibrationen auftreten. Darüber hinaus wirken sich Bewegungen oder Vibrationen des Senders und dessen Antenne durch Dopplerverschiebungen in dem abgestrahlten Signal aus.

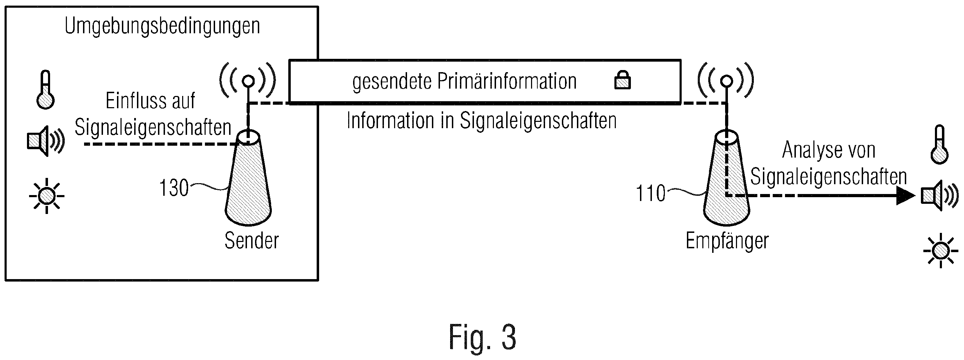

Durch diese Eigenschaften trägt das abgestrahlte Signal neben der Primärinformation weitere implizite Informationen über die Umgebungsbedingungen oder Eigenschaften des Senders. Zur Veranschaulichung ist dieses Phänomen grafisch in Fig. 3 gezeigt

Im Detail zeigt Fig. 3 eine schematische Ansicht eines Systems 100 mit einem Datensender 130 und einem Datenempfänger 110. Wie in Fig. 3 zu erkennen ist, wirken sich die Umgebungsbedingungen auf Seiten des Datensenders 130 auf das von dem Datensender 130 gesendete Signal 120 aus, so dass das Signal 120 neben einer Primärinformation zusätzlich eine Information über die Umgebungsbedingungen in den Signaleigenschaften aufweist. Mit anderen Worten, Fig. 3 zeigt eine Funkkommunikation zwischen Sender 130 und Empfänger 110, wobei neben der gesendeten Primärinformation auch die Information über die Signaleigenschaften gezeigt ist.

Ist es nun möglich am Empfänger 110 die Signaleigenschaften zu bestimmen (z.B. zu schätzen), kann über den Zusammenhang der Signaleigenschaften mit den Umgebungsbedingungen direkt auf die Umgebungsbedingungen am Sender 130, am Empfänger 110 oder dazwischen geschlossen werden. Da die größten Toleranzen allerdings am Sender 130 entstehen werden meistens Umgebungsbedingungen am Sender bestimmt. Die Temperatur kann beispielsweise aus einem ermittelten Frequenzoffset (Abweichung zur erwarteten Nominalfrequenz) über die in Fig. 1 gezeigte Kurve am Sender bestimmt werden.

Im Folgenden werden Ausführungsbeispiele der vorliegenden Erfindung beschrieben, die sich auf die Bestimmung der Umgebungsbedingungen aus den Signaleigenschaften und deren Auswertung beziehen.

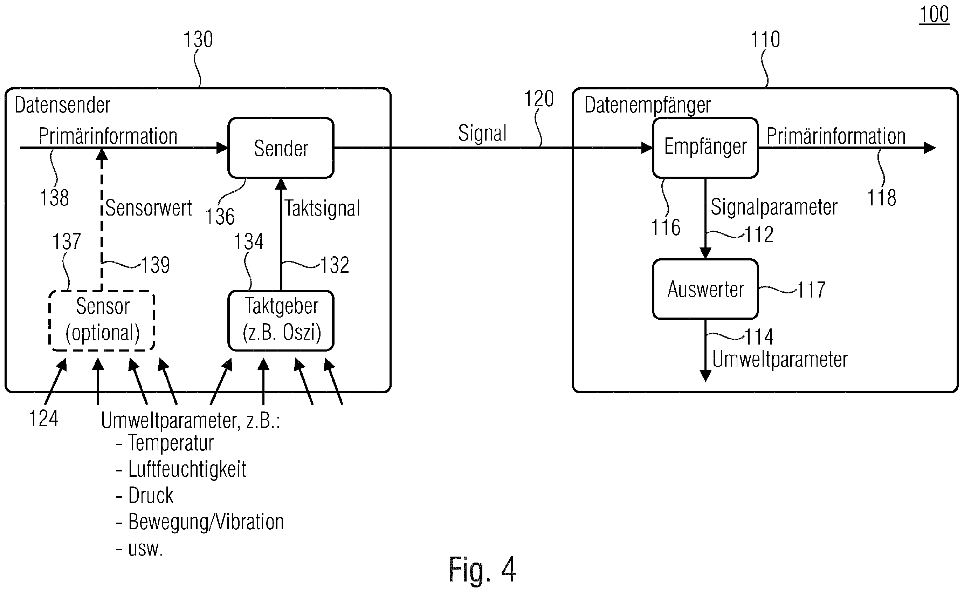

Fig. 4 zeigt ein schematisches Blockschaltbild eines Systems 100 mit einem Datenempfänger 110 und einem Datensender 130, gemäß einem Ausführungsbeispiel der vorliegenden Erfindung.

Der Datenempfänger 110 ist ausgebildet, um ein Signal 120 des Datensenders 130 zu empfangen, wobei das Signal 120 von einem Taktsignal 132 eines Taktgebers 134 (z.B. eines Frequenzgebers, wie z.B. eines Oszillators bzw. Quarzes) des Datensenders 130 abhängig ist. Der Datenempfänger 110 ist ferner ausgebildet, um einen Signalparameter 112 (z.B. eine Signaleigenschaft, wie z.B. eine Trägerfrequenz oder Trägerfrequenzabweichung) des Signals 120 zu ermitteln (z.B. auszuwerten), und um basierend auf dem Signalparameter 112 einen Umweltparameter 114 (z.B. eine Temperatur oder Temperaturänderung) zu ermitteln (z.B. zu schätzen), dem der Taktgeber 134 des Datensenders 130 und/oder dem das Signal 120 ausgesetzt ist.

Wie in Fig. 4 beispielhaft gezeigt ist, kann der Datensender 130 einen Sender 136 (Funkchip / Frontend) aufweisen, der ausgebildet ist, um das Signal 120 (Sendesignal) zu erzeugen, wobei das Signal 120 vom dem Taktsignal 132 des Taktgebers 134 abhängig ist. Beispielsweise kann der Sender 136 mit dem Taktsignal 132 des Taktgebers 134 getaktet sein, so dass das Signal 120 von dem Taktsignal 132 des Taktgebers 134 abhängig ist.

Ein Umweltparameter 124 (z.B. eine Temperatur oder Temperaturänderung), der auf den Taktgeber 134 des Datensenders 130 einwirkt, beeinflusst den Taktgeber 134 und damit zumindest einen Signalparameter (z.B. Frequenz) des von dem Taktgeber 134 bereitgestellten Taktsignals 132. Da das von dem Datensender 130 gesendete Signal 120 von dem Taktsignal 132 abhängig ist, beeinflusst der Umweltparameter 124 nicht nur einen Signalparameter (z.B. Frequenz) des Taktsignals 132, sondern auch einen Signalparameter (z.B. eine Signaleigenschaft, wie z.B. Trägerfrequenz) des von dem Datensender 130 gesendeten Signals 120.

Der Datenempfänger 110 kann somit durch Auswerten des Signalparameters 112 des empfangenen Signals 120 auf den Umweltparameter (z.B. Temperatur) in der Umgebung des Datensenders 130 schließen bzw. diesen schätzen.

Der Signalparameter 112 ist dabei unabhängig von einem Modulationsinhalt des Signals 120, wie z.B. von einer modulierten Primärinformation, die das Signal 120 aufweist.

Beispielweise kann der Datensender 130 (bzw. der Sender 136 des Datensenders 130) ausgebildet sein, um eine Primärinformation 138 (z.B. eine ID (=Identifikator) des Datensenders 130, eine Synchronisationssequenz/Pilotsequenz, Nutzdaten und/oder Dummy-Daten) zu modulieren, so dass das Signal 120 eine modulierte Primärinformation aufweist. Neben der modulierten Primärinformation enthält das Signal 120 jedoch zusätzlich eine Information über den Umweltparameter 124 (in der Umgebung des Datensenders 130) in dem Signalparameter 112, den der Datenempfänger 110 auswerten kann, um auf den Umweltparameter 114 zu schließen.

Wie in Fig. 4 beispielhaft gezeigt ist, kann der Datenempfänger 110 einen Empfänger 116 aufweisen, der ausgebildet ist, um das empfangenen Signal 120 zu demodulieren, um die in dem Signal 120 enthaltene Primärinformation 118 zu erhalten. Ferner kann der Datenempfänger 110 (z.B. der Empfänger 116 des Datenempfängers 110) ausgebildet sein, um den Signalparameter 112 des empfangenen Signals 120 zu ermitteln bzw. auszuwerten, um die in dem Signal 120 zusätzlich enthaltene Information über den Umweltparameter 124 zu erhalten. Beispielsweise kann der Datenempfänger 110 hierzu einen Auswerter 117 (z.B. einen Prozessor) aufweisen, der ausgebildet ist, um basierend auf dem Signalparameter 112 den Umweltparameter 114 zu ermitteln (z.B. zu schätzen), zum Beispiel basierend auf einer Abbildungsfunktion, die den Signalparameter 112 auf den Umweltparameter 114 abbildet.

Bei Ausführungsbeispielen kann der Datensender 130 (bzw. der Sender 136 des Datensenders 130) ausgebildet sein, um als Signal 120 ein digital moduliertes Signal 120 bereitzustellen. Der Datenempfänger 110 kann dabei ausgebildet sein, um einen analogen Signalparameter 112 (z.B. eine analoge Signaleigenschaft, wie z.B. eine Trägerfrequenz) des digital modulierten Signals 120 zu ermitteln, und basierend auf dem analogen Signalparameter 112 den Umweltparameter 114 zu ermitteln. Der analoge Signalparameter 112 ist dabei unabhängig von einem Modulationsinhalt des digital modulierten Signals 120, wie z.B. von einer digital modulierten Primärinformation, die das Signal 120 aufweist.

Bei Ausführungsbeispielen ist es somit möglich, basierend auf dem (analogen) Signalparameter 112 den Umweltparameter in der Umgebung des Datensenders 130 zu schätzen, ohne dass der Umweltparameter hierfür explizit in dem Modulationsinhalt des Signals 120, d.h. in der modulierten Primärinformation des Signals 120, übertragen werden muss.

Obwohl mit dem Signal 120 also primär ganz andere Nutzdaten oder auch nur eine ID des Datensenders und/oder eine Synchronisationssequenz/Pilotsequenz übertragen werden, ist es trotzdem möglich, basierend auf dem (analogen) Signalparameter 112 den Umweltparameter in der Umgebung des Datensenders 130 zu ermitteln.

Die Ermittlung des Umweltparameters in der Umgebung des Datensenders 130 basierend auf dem (analogen) Signalparameter des empfangen Signals 120 schafft ein breites Spektrum von Anwendungsmöglichkeiten.

So kann gem. Ausführungsbeispielen der Datensender 130, wie dies in Fig. 4 beispielhaft angedeutet ist, einen Sensor 137 für einen Umweltparameter 124 aufweisen. Da der Umweltparameter auf Seiten des Datenempfängers 110 auch basierend auf dem (analogen) Signalparameter 112 des Signals 120 ermittelt werden kann, ist es nicht mehr erforderlich den Sensorwert 139 regelmäßig bzw. mit jeder Aussendung des Signals 120 in der modulierten Primärinformation des Signals 120 zu übertragen. Vielmehr genügt es mit dem Signal 120 als modulierte Primärinformation eine Synchronisationssequenz/Pilotsequenz und/oder eine ID des Datensenders 130 oder aber auch nur Dummy-Daten zu übertragen. Hierdurch kann die mit dem Signal 120 übertragene Datenmenge reduziert werden, wodurch auch die zur Übertragung des Signals 120 erforderliche Energie reduziert werden kann, was insbesondere für batteriebetriebenen Datensender 130 von Vorteil ist. Auch muss der Sensor 137 nicht mehr für jede Aussendung des Signals 120 aktiviert werden, wodurch der Energieverbrauch weiter reduziert werden kann. Natürlich kann der von dem Sensor 137 bereitgestellte Sensorwert 139 zusätzlich in einer Aussendung oder einer geringen Anzahl (Teilmenge) von Aussendungen des Signals 120 in der modulierten Primärinformation mit übertragen werden und auf Seiten des Datenempfängers 110 beispielsweise zur Kalibrierung oder Initialisierung genutzt werden. Genauso ist es möglich auf Seiten des Datensenders 130 vollständig auf den Sensor 137 für den Umweltparameter zu verzichten und/oder den Umweltparameter auf Seiten des Datenempfängers 110 ausschließlich basierend auf dem ermittelten Signalparameter 112 des empfangen Signals 120 zu ermitteln.

Ferner ist es durch die Ermittlung des Umweltparameters auf Seiten des Datenempfängers 110 basierend auf dem (analogen) Signalparameter 112 des Signals 120 möglich, einen Datensender 130, der einen Sensor 137 für einen ersten Umweltparameter aufweist, ebenfalls als Sensor für einen zweiten Umweltparameter zu verwenden. Beispielsweise kann gem. Ausführungsbeispielen der Datensender 130 einen Sensor 137 für einen ersten Umweltparameter 124 (z.B. Luftfeuchtigkeit oder Druck) aufweisen, wobei der Datenempfänger 110 ausgebildet ist, um basierend auf dem ermittelten Signalparameter 112 des Signals 120 einen zweiten Umweltparameter (z.B. Temperatur) zu ermitteln, wobei der erste Umweltparameter und der zweite Umweltparameter unterschiedlich sind.

Des Weiteren ist es durch die Ermittlung des Umweltparameters auf Seiten des Datenempfängers 110 basierend auf dem (analogen) Signalparameter 112 des empfangenen Signals 120 möglich, einen Datensender 130 als Sensor für einen Umweltparameter zu verwenden, der keinen Sensor für den Umweltparameter aufweist.

Darüber hinaus ist es möglich einen vorhandenen Datensender 130 als Sensor für einen Umweltparameter (z.B. als Temperatursensor) zu verwenden, obwohl der Datensender 130 an sich nicht als Sensor für den Umweltparameter vorgehsehen ist, beispielsweise da der Datensender 130 über keinen Sensor für den Umweltparameter verfügt oder aber auch weil der Datensender 130 den Sensorwert nicht übertragen kann.

Der Datensender 130 und der Datenempfänger 110 können optional ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket in eine Mehrzahl von Sub-Datenpakete (oder Teildatenpakete, oder Teilpakete) aufgeteilt und die Sub-Datenpakete entsprechend eines Sprungmusters in der Zeit verteilt und/oder in der Frequenz verteilt von dem Datensender 130 zu dem Datenempfänger 110 übertragen, wobei der Datenempfänger 110 die Sub-Datenpakete wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete sondern nur ein Teil der Sub-Datenpakete erforderlich ist. Die zeitliche Verteilung der Mehrzahl von Sub-Datenpaketen kann entsprechend eines Zeit- und/oder Frequenzsprungmusters erfolgen.

Im Folgenden werden detaillierte Ausführungsbeispiele der vorliegenden Erfindung beschrieben.

### 1. Bestimmung der Empfangsparameter und Abbildung auf Umweltparameter (Temperatur)

Manche Empfänger verfügen bereits über Schätzverfahren die sehr genau die Empfangsparameter (Signalparameter des empfangen Signals 120) schätzen können. Andere Empfänger können mit solchen Schätzverfahren nachgerüstet werden. Typische Empfangsparameter die geschätzt werden können sind
- Empfangsträgerfrequenz,
- Empfangszeitpunkte,
- Empfangs Symbolrate,
- Empfangs Modulationsindex (bei Frequenzumtastungsverfahren z. B bei FSK oder GMSK),
- Doppler Frequenz (nur bei Vibration/Bewegung),
- Signal Rauschverhältnis,
- Signalleistung (RSSI),
- Kanalphase, Kanaldämpfung,
- Dispersion in dem Kanal (Anzahl der Mehrpfade), und
- Polarisationsdrehung.

Die Abweichungen der geschätzten Empfangsparameter zu den erwarteten Empfangsparametern geben Schlüsse auf die Umweltparameter.

Die Umweltparameter können dabei Umweltparameter in der Nähe des Datensenders 130 (z.B. Sendeknotens) sein, wie z.B. eine Temperatur des Datensenders oder eine Umgebungstemperatur (z.B. Raumtemperatur) der Umgebung des Datensenders, oder Umweltparameter des Kanals (z.B. Kommunikationskanals zwischen Datensender 130 und Datenempfänger 110) oder auch Umweltparameter des Datenempfänger 110 (Empfängers).

Im Allgemeinen hängen die Empfangsparameter von Toleranzen der Sendehardware, Störungen, die in dem Kanal verursacht werden, und/oder Toleranzen der Empfangshardware ab.

Bei Ausführungsbeispielen kann zumindest einer der Umweltparameter in der Umgebung des Datensenders 130 basierend auf einen Signalparameter des empfangen Signals 120 ermittelt werden. Ausführungsbeispiele können dabei sowohl für eine drahtlose Übertragung (z.B. über einen Funkkanal) als auch für eine kabelgebundene Übertragungen genutzt werden.

Im Folgenden wird beispielhaft die Schätzung der Empfangsträgerfrequenz als Signalparameter und die Abbildung der geschätzten Empfangsträgerfrequenz auf die Temperatur im Datensender 130 (z.B. Sendekonten) als Umweltparameter erläutert. Die Schätzung wird im Beispiel in einer Basisstation als Datenempfänger 110 durchgeführt. Der Datensender 130 (z.B. Endpunkt) sendet beispielsweise ein Datenpaket über einen drahtlosen Kommunikationskanal (z.B. Luft). Die Trägerfrequenz des Datenpakets wird durch den HF Quarz des Datensenders 130 bestimmt (siehe Fig. 1). Eine Temperatur von beispielsweise -12 Grad verzieht die Quarzfrequenz um + 10 ppm. Zusätzlich zu der Temperatur hängt die Trägerfrequenz auch von der Alterung und von der Exemplarstreuung ab. Die Exemplarstreuung ist eine einmalig feste Abweichung, die in der Produktion des Quarzes und der Herstellung der Leiterplatte entsteht. Die Exemplarstreuung kann während der Produktion abgeglichen und eliminiert werden. Die Alterung ist ein sehr langsamer Prozess, bei der sich die Frequenz über Jahre ändert. Die altersbedingte Abweichung des Quarzes kann nach der Kalibrierung mit 0 ppm angenommen werden. Zunächst kann ein Mittelwert über einen vorgegebenen Zeitraum, wie z.B. einem Jahr, als Referenz gebildet werden, um einen Referenzmittelwert zu erhalten. Anschließend kann ein Mittelwert (z.B. gleitender Mittelwert) über einen weiteren vorgegebenen Zeitraum, wie z.B. einem Jahr, gebildet werden, um die Alterung abzuschätzen. Die Differenz zwischen dem Referenzmittelwert und dem Mittelwert ergibt die Änderung durch die Alterung, d.h. die Abweichung zwischen Anfangsmittelwert (Referenzmittelwert) und aktuellen Mittelwert kann als Alterungsabweichung angenommen werden. Die aktuelle Alterung per Datensender 130 (z.B. Knoten) kann in der Basisstation 110 gespeichert werden. Der verbleibende Effekt ist dann nur die aktuelle Temperaturänderungen, welche durch die Temperaturkurve des Quarzes (siehe Fig. 1) beschrieben werden kann. Die Quarzfrequenz, welche beispielsweise im Idealfall 20 MHz beträgt, verschiebt sich dann zu 20,0002 MHz. Die Sendeträgerfrequenz des Datensenders 130 (z.B. Endknotens) verschiebt sich somit von 868 MHz auf 868,008680 MHz. Der Empfänger 116 in der Basisstation 110 empfängt das Datenpaket und schätzt die Trägerfrequenz. Die Schätzung ist sehr genau und gibt eine Abweichung von 8,68 kHz an. Hierbei wird angenommen, dass die Basisstation 110 sehr genaue Taktgeber besitzt. Beispielsweise kann die Basisstation 110 GPS synchronisiert sein oder einen sehr genauen temperaturkompensierten Quarz aufweisen, wie z.B. einen TCXO (temperature compensated crystal oscillator, dt. temperaturkompensierter Kristalloszillator) oder OCXO (oven controlled crystal oscillator, dt. ofenkontrollierter Kristalloszillator) der praktisch keine zusätzlichen Fehler zufügt. Gemäß Fig. 1 ist eine Abweichung von 8,68 kHz nur bei einer Temperatur von -12°C möglich, womit die Temperatur eindeutig bestimmt werden kann.

Etwas komplizierter ist der Fall, wenn die Frequenzschätzung beispielsweise einen Wert von +5 ppm ergibt. In diesem Fall existieren gemäß Fig. 1 zwei mögliche Lösungen, und zwar -32° und +12 °C. Hier reicht eine einzelne Temperaturmessung nicht aus. Beispielsweise kann eine zweite Messung durchgeführt werden. Wenn die zweite Messung beispielsweise eine Temperatur von +24°C ergibt und eine Differenz zu der vorherigen Schätzung der Empfangsträgerfrequenz +7 ppm beträgt, dann ist die Wahrscheinlichkeit höher, dass die Temperatur +12°C beträgt.

Bei Ausführungsbeispielen kann mindestens ein Empfangsparameter der Übertragung geschätzt werden und durch eine Abbildungsfunktion auf mindestens einem Umweltparameter oder eine Änderung des Umweltparameters abgebildet werden.

Bei Ausführungsbeispielen kann die Temperatur über eine Trägerfrequenzschätzung geschätzt werden.

Bei Ausführungsbeispielen kann die Messung z.B. einmalig mit Hilfe eines Temperatursensors kalibriert werden, um den aktuellen Temperaturpunkt zu ermitteln. Die Kalibrierung des Temperatursensors bringt einen weiteren Vorteil. Unterschiedliche Quarze weisen unterschiedliche Temperaturkurven auf. Beispielsweise kann in Abhängigkeit von einem Schnitt des Quarzes die Temperaturkurve etwas steiler oder flacher ausfallen. Basierend auf zumindest zwei mit dem Temperatursensor kalibrierten Temperaturpunkten kann die genaue Kurve ermittelt werden. Während der Kalibrierung kann die Alterung auch berechnet werden. In dem Fall zieht man den Mittelwert bei der Temperatur durch den Temperatur Sensor gemessen jetzt von dem Mittelwert gemessen letzten Jahres bei der gleichen Temperatur des Temperatursensors ab.

Bei Ausführungsbeispielen kann mittels eines existierenden Temperatursensors 137 eine initiale oder immer wiederkehrende Kalibrierung durchgeführt werden, die für die Verfeinerung der Abbildungsfunktion benutzt werden kann.

Bei Ausführungsbeispielen kann zunächst die Trägerfrequenz und daraus die Abweichung der Quarzfrequenz geschätzt werden.

Bei Ausführungsbeispielen können Empfangsparameter wiederum in andere Empfangsparameter abgebildet werden bevor diese in Umweltparameter abgebildet werden.

Analog zur Schätzung des Frequenzfehlers des Frequenzgebers basierend auf der Empfangsträgerfrequenz kann auch der Frequenzfehler des Zeitgebers geschätzt werden. Dafür kann der erwartete zeitliche Abstand mit dem geschätzten Zeitabstand zwischen zwei Datenpaketen bzw. Sub-Datenpaketen verglichen werden. Für die zeitliche Abweichung ist nicht nur der aktuelle Wert der Temperatur relevant, sondern die akkumulierte Temperaturänderung. Damit gibt die zeitliche Abweichung an, um wieviel sich die Temperatur im Mittel von der letzten Messung geändert hat (siehe Fig. 2). Der Frequenzfehler des Zeitgebers kann für eine eigenständige Schätzung der Umwelteinflüsse benutzt werden oder in Kombination mit der Abweichung der HF Quarzes.

Bei Ausführungsbeispielen können die Empfangsparameter (Empfangs-)Zeitpunkte der Datenpakete/Sub-Datenpakete, eine Trägerfrequenz, ein Symboltakt, ein Modulationsfehler, eine Empfangsleistung, oder ein empfangenes Signal-Rausch-Verhältnis sein.

Bei Ausführungsbeispielen kann zumindest eine Quarzkurve (z.B. wie in Fig. 1) in dem Datenempfänger 110 (z.B. Basisstation) hinterlegt werden.

Bei Ausführungsbeispielen können die Temperaturwerte eines Temperatursensors in den Nutzdaten (engl. payload) mitgesendet werden.

### 2. Bestimmung der Empfangsparameter und Abbildung auf Umweltparameter (andere)

Im Falle eines beweglichen Datensenders 130 (mobiler Betrieb) ändert sich die Trägerfrequenz des Signals 120 durch die Dopplerverschiebung. Die Verschiebung der Trägerfrequenz des Signals 120 hängt dabei von der Geschwindigkeit ab, mit der sich der Datensender 130 bewegt. Basierend auf der Schätzung der Verschiebung der Trägerfrequenz kann somit die Geschwindigkeit des Datensenders 130 relativ zu dem Datenempfänger 110 (z.B. Basisstation) geschätzt werden. Soweit die Geschwindigkeit des Datensenders 130 bezogen auf mehrere geographische Punkte (z.B. von mehreren Datenempfängern 110 (z.B. Basisstationen)) geschätzt wird, kann auch die Richtung und Geschwindigkeit des Datensenders 130 genauer geschätzt werden.

Bei Ausführungsbeispielen kann basierend auf einer Änderung (Verschiebung) der Trägerfrequenz des Signals 120 eine Bewegung erkannt werden.

Bei Ausführungsbeispielen kann basierend auf einem Frequenzprofil auf eine Vibration oder andere Bewegungen geschlossen werden (Schätzung der Doppler Verschiebung). Das Frequenzprofil bezieht sich dabei auf ein Profil der Dopplerverschiebung im Signal. Bei einer Vibration ändert sich die relative Geschwindigkeit des Senders zum Empfänger ständig, dadurch ergibt sich eine schnelle Änderung der geschätzten Dopplerfrequenz. Vibriert z.B. der Sender mit 100Hz, so ist 100 Mal pro Sekunde ein Anstieg und Abfall der Dopplerverschiebung im Signal die Folge.

Bei Ausführungsbeispielen ändert sich durch die Vibration des Quarzes die vom Quarz bereitgestellte Frequenz bzw. Referenzfrequenz (Mikrofonie des Quarzes). Hierdurch kann ebenfalls eine Vibration erkannt werden. Im Gegensatz zu dem Ausführungsbeispiel zuvor ergibt sich hier eine Frequenzabweichung im Signal, die konstant ist bei konstanter Vibrationsfrequenz. Diese entsteht durch eine Verstimmung des Quarzes, wenn dieser Vibrationen ausgesetzt wird.

### 3. Durch die Differenz von zwei Empfangsparameter auf die Umwelt schließen

Anstatt die Differenz zwischen dem geschätzten Empfangsparameter (z.B. Empfangsträgerfrequenz) und dem erwarteten Empfangsparameter (z.B. Empfangsträgerfrequenz) zu bestimmen, kann bei Ausführungsbeispielen auch die Differenz zwischen einem zu einem ersten Zeitpunkt (z.B. während einer ersten Aussendung des Signals 120) geschätzten Empfangsparameter (z.B. Empfangsträgerfrequenz) und einem zu einem zweiten Zeitpunkt (z.B. während einer zweiten Aussendung des Signals 120) geschätzten Empfangsparameter (z.B. Empfangsträgerfrequenz) ermittelt werden. Basierend auf der Differenz der Empfangsparameter kann eine Differenz des Umweltparameters ermittelt werden, wie z.B. eine Temperaturerhöhung (z.B. von +3°C).

Bei Ausführungsbeispielen kann ein Empfangsparameters basierend auf der Differenz von zumindest zwei anderen Empfangsparametern ermittelt werden. Der so ermittelte Empfangsparameter kann anschließend in den Umweltparameter (Umgebungsbedingungen) umgerechnet werden.

Bei Ausführungsbeispielen kann der Empfangsparameter die Differenz zwischen zwei geschätzten Empfangsfrequenzen sein.

### 4. Schätzung von Empfangsparametern

Im Folgenden werden Ausführungsbeispiele der Schätzung von Signalparametern (Empfangsparametern) beschrieben.

Bei Ausführungsbeispielen können zur Schätzung des Empfangsparameters die gesendeten Symbole der Übertragung (des Signals 120) eingesetzt werden.
Bei Ausführungsbeispielen kann die Schätzung des Empfangsparameters basierend auf bekannten Symbolen erfolgen, die in der Übertragung eingesetzt werden, z.B. Pilotsymbole.

Bei Ausführungsbeispielen kann die Schätzung des Empfangsparameters basierend auf zwei Gruppen von Symbolen eines Datenpakets/Teildatenpakets erfolgen, wobei die zwei Gruppen von Symbolen voneinander beabstandet sind. Beispielsweise kann eine erste Gruppe von Symbolen am Anfang des Datenpakets/Teildatenpakets angeordnet sein, während eine zweite Gruppe von Symbolen am Ende des Datenpakets/Teildatenpakets angeordnet sein kann.

Bei Ausführungsbeispielen kann die Schätzung des Empfangsparameters auf mindestens vier Symbolen, vorzugsweise mindestens 20 Symbolen und besonders vorzugsweise mindestens 40 Symbolen basieren.

Bei Ausführungsbeispielen kann die Schätzung des Empfangsparameters basierend auf unbekannten Symbolen (des Datenpakets/Teildatenpakets) erfolgen (sog. blinde Schätzung).

Bei Ausführungsbeispielen können die Symbole, basierend auf denen die Schätzung des Empfangsparameter erfolgt, unmittelbar benachbarte Symbole oder voneinander beabstandeten Symbole sein.

Bei Ausführungsbeispielen können die Symbole ein Subdatenpaket (Teildatenpaket, radio burst) oder ein Datenpaket bilden.

Bei Ausführungsbeispielen können die Symbole, basierend auf denen die Schätzung des Empfangsparameter erfolgt, einem dem Datenempfänger 110 bekannten Muster entsprechen, wie z.B. einer Synchronisationssequenz.

Bei Ausführungsbeispielen können die Symbole, basierend auf denen die Schätzung des Empfangsparameter erfolgt, über mehrere Teildatenpakete/Datenpakete verteilt sein.

### 5. Verbesserung der Schätzgenauigkeit durch mehr Daten (Kalibrierung der Abbildungskurve)

Wie bereits erwähnt hat jeder Quarz eine andere Temperaturkurve. Die Temperaturkurve des Quarzes kann aus einer möglichen Menge von möglichen Kurven genauer bestimmt werden. Dafür können stochastische Momente, wie z.B. Mittelwert / Varianz, gebildet werden. Auch die Bestimmung einer Verteilung ist möglich. Ferner kann ein Mittelwert gebildet werden, um die Exemplarstreuung rauszurechnen oder um die mittlere Temperatur zu bestimmen.

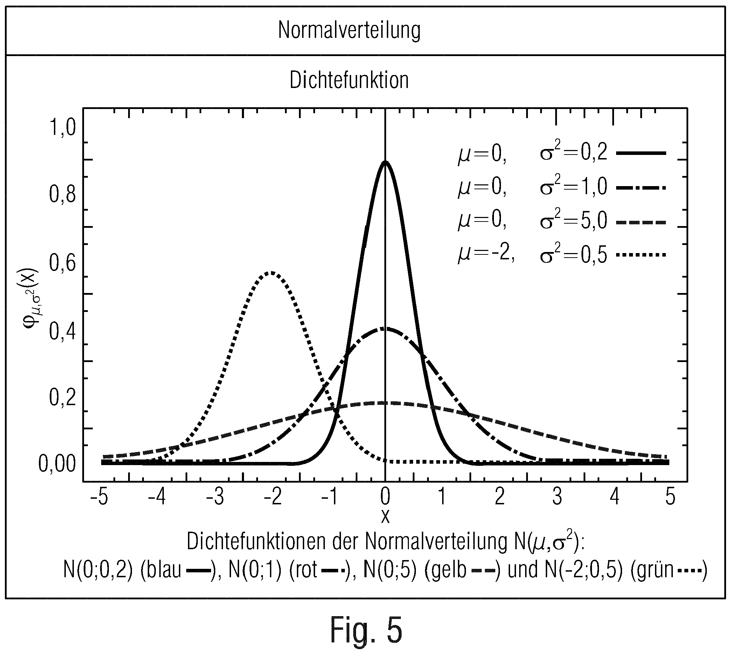

Fig. 5 zeigt in einem Diagramm Dichtefunktionen von vier unterschiedlichen Normalverteilungen. Dabei beschreibt die Ordinate die Wahrscheinlichkeitsdichte und die Abszisse den Wert einer Zufallsvariable.

Bei Ausführungsbeispielen kann über mehrere Temperaturwerte aus dem Sensor gemittelt werden, um den Mittelwert und/oder die Streuung der Temperatur zu bestimmen (siehe Fig. 5). Der Mittelwert und die Streuung können benutzt werden, um die genaue Temperaturkurve des Quarzes aus einer Menge (einem Satz) von möglichen Temperaturkurven zu bestimmen (Quarzfehler über Temperatur). Danach wird der Sensor nicht mehr benutzt, sondern nur der Quarz.

Wenn die Temperatur durch einen Temperatursensor bestimmt wurde, kann die Quarzkurve (Temperaturkurve des Quarzes) genauer bestimmt werden. Hierfür können mehrere Punkte aus der Kurve, mindestens zwei, kalibriert werden. Beispielsweise kann für eine gewisse Temperatur die genaue Frequenzabweichung (also diskrete Punkte auf der Quarzkurve) bestimmt werden. Dann kann mittels einer Polynomapproximationen, die durch die Punkte geht, die vollständige Kurve bestimmt werden (Befehl polyfit in MATLAB). Die Polynome überschreiten nicht bestimmte Grenzen, die durch den Quarzhersteller garantiert sind.

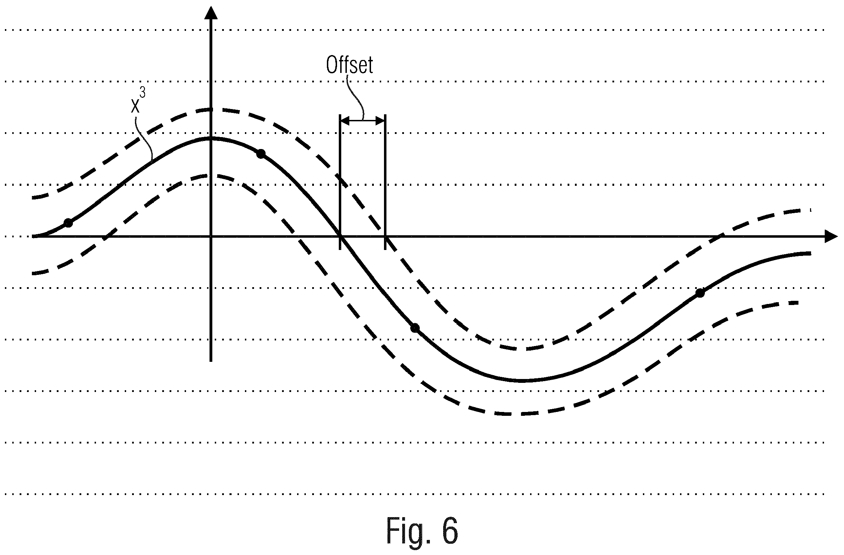

Fig. 6 zeigt in einem Diagramm eine schematische Ansicht der datenempfängerseitigen Bestimmung der Quarzkurve des Quarzes des Datensenders, gemäß einem Ausführungsbeispiel der vorliegenden Erfindung. Dabei beschreibt die Ordinate die Frequenzabweichung in ppm und die Abszisse die Temperatur in °C.

Es gibt zwei Möglichkeiten die Quarzkurve zu bestimmen.

Gemäß einer ersten Möglichkeit kann gleichzeitig eine Frequenz geschätzt und zusätzlich die Temperatur dazu aus der Payload ausgelesen werden. Die Temperatur wurde hierzu z.B. mittels eines Sensors erfasst. Dadurch sind die Werte der Abszisse und der Ordinate eines Punktes bekannt.

Wenn die gleiche Vorgehensweise für unterschiedliche Temperaturen (z.B. Tag / Nacht) wiederholt wird, können mehrere Punkte der Quarzkurve bestimmt werden. Die Quarzkurve kann durch die Funktion ax^3+bx^2+cx+d beschrieben werden. Durch Polynomapproximation (z.B. Befehl polyfit in Matlab) können die passenden Koeffizienten bestimmt werden und die komplette Kurve ermittelt werden.

In Fig. 6 ist die gestrichelte Kurve die bestimmte Quarzkurve. In der Produktion wurde bei der Kalibrierung 1 Punkt festgemacht, nämlich z.B. x = 20°C y = 0 ppm. Die Differenz zwischen der gestrichelten Kurve (von polyfit) und der Nullpunkt aus der Produktionskalibrierung ergibt den Offset auf Fig 6. Der Offset kann sich z.B. durch Alterung mit der Zeit verschoben haben.

Gemäß einer zweiten Möglichkeit wird nur die Frequenz geschätzt und die Temperatur dazu ist nicht bekannt. Damit ist nur die Ordinate jedes Punktes bekannt und nicht die Abszisse. Wenn mehrere Punkte der Kurve ermittelt wurden, kann basierend auf diesen entweder eine gequetschte oder eine gespreizte Quarzkurve ermittelt werden. Da der mögliche Verlauf der Kurve bekannt ist (z.B. Sinus ähnlich mit bekannter Frequenz) kann die Quetschung/Spreizung rausgerechnet und die Quarzkurve grob bestimmt werden.

Eine Mittelung der Frequenz kann in beiden Möglichkeiten benutzt werden um den Punkt der Quarzkurve genauer/unverrauschter zu bestimmen.

Bei Ausführungsbeispielen kann durch Messung von unterschiedlichen Temperaturen (z.B. Tagsüber, Nachtsüber, im Winter, im Sommer) die Quarzkurve genauer bestimmt werden (siehe Fig. 6).

Bei Ausführungsbeispielen kann der Fehler des Zeitgebers (LF 32 kHz) über die Frequenz des Trägerfrequenzgebers abgeglichen werden. Daraus ergibt sich ein Wert von X ppm. Hierbei ist der Trägerfrequenzgeber meistens präziser ist als der Zeitgeber. Die Abweichung der zwei Frequenzen kann im Signal 120 (z.B. Uplink) mitgeschickt werden und für eine Verfeinerung der Umweltparametermessung benutzt werden.

Bei Ausführungsbeispielen kann das Signal 120 (in der modulierten Primärinformation) eine Information aufweisen, die beschreibt, um wieviel der Zeitgeber (Zeitquarz, LF Quarz) und der Frequenzgeber (Frequenzquarz, HF Quarz) auseinanderlaufen. Diese Information kann im Datenempfänger (z.B. Basisstation) zur Kalibrierung der Quarzkurven oder für die Bestimmung der Umweltparameter eingesetzt werden.

Bei Ausführungsbeispielen können die entsprechenden Sendeparameter durch mindestens zwei unterschiedliche Taktgeber (z.B. Quarze) generiert werden, zum Beispiel kann durch einen ersten Quarz die Trägerfrequenz eines ersten Signals (z.B. eines ersten Datenpakets) generiert werden und durch einen zweiten Quarz die Trägerfrequenz eines zweiten Signal (z.B. eines zweiten Datenpakets). Die Ergebnisse der zwei Quarze können dann (auf Seiten des Datenempfängers) kombiniert (z.B. gemittelt) werden. Im Detail können Datensenderseitig zwei (z.B. quarzstabilisierte) Oszillatoren verwendet werden. Der Basistation kann bekannt sein, dass der Datensender zwei Oszillatoren aufweist und wann welcher Oszillator verwendet wird. Beispielsweise kann der Datensender abwechselnd Signale, die vom ersten Oszillator und vom zweiten Oszillator abhängig sind, senden. Bedingt dadurch, dass für die zwei Oszillatoren auch zwei Quarzkurven hinterlegt sind, können Datenempfängerseitig basierend auf den empfangenen Signalen und den zwei Quarzkurven auch zwei Temperaturen ermittelt werden, wobei die zwei Temperaturen kombiniert werden können (z.B. durch Mittelwertbildung), um die endgültige Temperatur zu erhalten. Natürlich können auch mehr als zwei Oszillatoren verwendet werden.

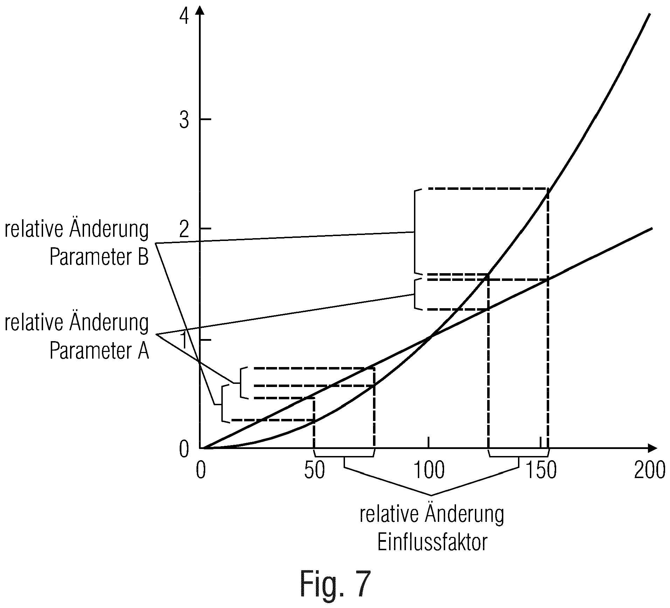

Falls zwei (oder mehr) Signalparameter geschätzt werden, die unterschiedlich beeinflusst werden, kann aus den relativen Änderungen der Abweichungen eine Rekonstruktion der absoluten Werte der beeinflussenden Faktoren erfolgen. Besteht z.B. eine lineare Abhängigkeit von der Temperatur bei Parameter A, und eine quadratisch Abhängigkeit von der Temperatur bei Parameter B, kann durch Vergleich der relativen Abweichungen auf die absolute Position auf der Quarzkurve geschlossen werden (vgl. Fig. 7).

Im Detail zeigt Fig. 7 in einem Diagramm Abhängigkeiten von zwei unterschiedlichen Signalparametern von einem Umweltparameter. Dabei beschreibt die Ordinate den Wert der Signalparameter (z.B. Frequenzabweichung und Zeitabweichung), während die Abszisse den Wert eines Umweltparameters (z.B. Temperatur) beschreibt. Mit anderen Worten, Fig. 7 zeigt Relativabweichungen bei unterschiedlich beeinflussten Parametern. Dabei sind relativen Abweichungen die eingezeichneten Differenzen zwischen den beobachteten Punkten, wobei die Achsen den beeinflussenden Umweltparameter (Abszisse) und beeinflusste Signalparameter (Ordinate) direkt darstellen.

Bei Ausführungsbeispielen erfolgt eine Kombination von Schätzwerten von unterschiedlich beeinflussbaren Sendern zur Ermittlung von Absolutwerten aus Relativabweichungen. Wenn mehrere Sender in gleicher oder ähnlicher Umgebung (z.B. im gleichen Raum) vorhanden sind und diese Sender (oder deren Quarze) unterschiedlich von Temperaturänderungen beeinflusst werden, kann durch einen Vergleich der ermittelten Signalparameter ein Empfänger, der mehrere dieser Sender empfängt, auf Absolutwerte schließen (analog zu Fig. 7) oder generell die Schätzgenauigkeit erhöhen.

### 6. Weitere Ausführungsbeispiel

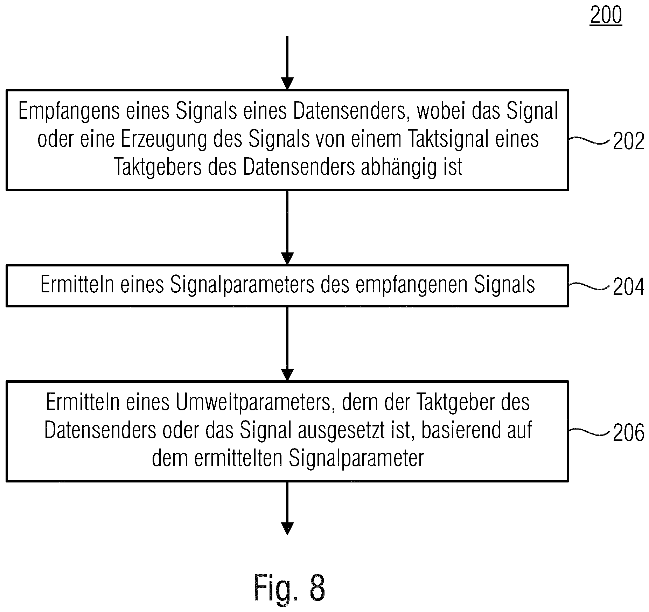

Fig. 8 zeigt ein Flussdiagramm eines Verfahrens 200 zum Ermitteln eines Umweltparameters in der Umgebung eines Datensenders, gemäß einem Ausführungsbeispiel der vorliegenden Erfindung. Das Verfahren 200 umfasst einen Schritt 202 des Empfangens eines Signals eines Datensenders, wobei das Signal oder eine Erzeugung des Signals von einem Taktsignal eines Taktgebers (z.B. eines Frequenzgebers, wie z.B. Oszillators bzw. Quarzes) des Datensenders abhängig ist. Das Verfahren 200 umfasst ferner einen Schritt 204 des Ermittelns (z.B. Schätzens) eines Signalparameters (z.B. einer Signaleigenschaft) des empfangenen Signals. Das Verfahren 200 umfasst ferner einen Schritt 206 des Ermittelns eines Umweltparameters (z.B. eine Temperatur oder Temperaturänderung), dem der Taktgeber des Datensenders oder das Signal ausgesetzt ist, basierend auf dem ermittelten Signalparameter.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] https://de.wikipedia.org/wiki/Schwingquarz
[2] https://www.nxp.com/docs/en/application-note/AN3251.pdf
[3] https://de.wikipedia.org/wiki/Quadraturphasenumtastung#/media/ File:QPSK_Gray_Coded.svg
[4] http://eur-lex.europa.eu/legalcontent/DE/TXT/PDF/?uri=uriserv:OJ.L_.2016.119.01.0001.01.DEU
[5] https://www.sii.co.jp/en/quartz/circuit-design/
[6] https://de.wikipedia.org/wiki/Normalverteilung

## Patentansprüche

1. Datenempfänger (110),
wobei der Datenempfänger (110) ausgebildet ist, um ein Signal (120) eines Datensenders (130) zu empfangen, wobei das Signal (120) oder eine Erzeugung des Signals (120) von einem Taktsignal (132) eines Taktgebers (134) des Datensenders (130) abhängig ist,
wobei der Datenempfänger (110) ausgebildet ist, um einen Signalparameter (112) des Signals (120) zu ermitteln, und um basierend auf dem Signalparameter (112) einen Umweltparameter (114) zu ermitteln, dem der Taktgeber des Datensenders (130) oder das Signal (120) ausgesetzt ist.

2. Datenempfänger (110) nach einem der vorangehenden Ansprüche,
wobei der Datenempfänger (110) ausgebildet ist, um für die Ermittlung des Signalparameters (112) bekannte Symbole in dem Signal (120) zu verwenden.

3. Datenempfänger (110) nach Anspruch 2,
wobei die bekannten Symbole in Gruppen aufgeteilt sind, wobei sich die Gruppen von Symbolen an verschiedenen Stellen des Signals (120) befinden.

4. Datenempfänger (110) nach einem der Ansprüche 2 bis 3,
wobei das Signal (120) eine Mehrzahl von Sub-Datenpaketen aufweist, wobei die bekannten Symbole über mehrere Sub-Datenpakete verteilt sind.

5. Datenempfänger (110) nach Anspruch 1,
wobei der Datenempfänger (110) ausgebildet ist, um für die Ermittlung des Signalparameters (112) keine bekannten Symbole zu verwenden.

6. Datenempfänger (110) nach einem der vorangehenden Ansprüche,
wobei das Signal (120) neben einer modulierten Primärinformation eine Information über den Umweltparameter (114) in dem Signalparameter (112) aufweist.

7. Datenempfänger (110) nach Anspruch 6,
wobei das Signal (120) in gewissen Zeitabständen ausgesendet wird,
wobei eine Aussendung des Signals (120) oder eine echte Teilmenge der Aussendungen des Signals (120) zusätzlich eine Information über den Umweltparameter (114) in der modulierten Primärinformation aufweist,
wobei der Datenempfänger (110) ausgebildet ist, um die Ermittlung des Umweltparameters (114) basierend auf dem Signalparameter (112) basierend auf der in der modulierten Primärinformation enthaltenen Information über den Umweltparameter (114) zu kalibrieren.

8. Datenempfänger (110) nach einem der vorangehenden Ansprüche,
wobei der Datenempfänger (110) ausgebildet ist, um den Umweltparameter (114) basierend auf einer Abbildungsfunktion aus dem Signalparameter (112) zu ermitteln.

9. Datenempfänger (110) Anspruch 8,
wobei dem Datenempfänger (110) die Abbildungsfunktion bekannt ist.

10. Datenempfänger (110) nach Anspruch 8,
wobei der Datenempfänger (110) ausgebildet ist, um die Abbildungsfunktion basierend auf zumindest einer von einem Sensor bestimmten Information über den Umweltparameter (114) zu kalibrieren.

11. Datenempfänger (110) nach Anspruch 8,
wobei der Datenempfänger (110) ausgebildet ist, um die Abbildungsfunktion basierend auf zumindest einer von einem Sensor bestimmten Information über den Umweltparameter (114) aus einem Satz von Abbildungsfunktionen auszuwählen.

12. Datenempfänger (110) nach Anspruch 11,
wobei der Datenempfänger (110) ausgebildet ist, um einen Mittelwert und eine Streuung über zumindest zwei von dem Sensor bestimmten Informationen über den Umweltparameter (114) zu ermitteln,
wobei der Datenempfänger (110) ausgebildet ist, um die Abbildungsfunktion basierend auf dem Mittelwert und der Streuung aus dem Satz von Abbildungsfunktionen auszuwählen.

13. Datenempfänger (110) nach einem der Ansprüche 8 bis 12,
wobei die Abbildungsfunktion eine Temperaturkurve des Taktgebers (134) des Datensenders (130) ist.

14. Datenempfänger (110) nach einem der vorangehenden Ansprüche,
wobei das Signal (120) in gewissen Zeitabständen ausgesendet wird,
wobei der Datenempfänger (110) ausgebildet ist, um basierend auf zumindest zwei Aussendungen des Signals (120) zumindest zwei Signalparameter zu ermitteln,
wobei der Datenempfänger (110) ausgebildet ist, um den Umweltparameter (114) basierend auf den zumindest zwei Signalparametern zu ermitteln.

15. Datenempfänger (110) nach einem der vorangehenden Ansprüche,
wobei der Datenempfänger (110) ausgebildet ist, um zumindest zwei Signalparameter des Signals (120) zu ermitteln,
wobei der Datenempfänger (110) ausgebildet ist, um basierend auf den zumindest zwei Signalparametern jeweils einen Umweltparameter zu ermitteln, dem der Taktgeber des Datensenders (130) oder das Signal (120) ausgesetzt ist.

16. Datenempfänger (110) nach dem vorangehenden Anspruch,
wobei der Datenempfänger (110) ausgebildet ist, um die ermittelten Umweltparameter zu kombinieren, um einen kombinierten Umweltparameter zu erhalten.

17. Datenempfänger (110) nach einem der vorangehenden Ansprüche,
wobei das Signal (120) oder eine Erzeugung des Signals (120) ferner von einem weiteren Taktsignal eines weiteren Taktgebers des Datensenders (130) abhängig ist,
wobei der Datenempfänger (110) ausgebildet ist, um zwei Signalparameter des Signals (120) zu ermitteln, und um den Umweltparameter basierend auf den zwei Signalparametern zu ermitteln.

18. Datenempfänger (110) nach dem vorangehenden Anspruch 17,
wobei das Signal (120) in gewissen Zeitabständen ausgesendet wird,
wobei zumindest eine Aussendung des Signals (120) oder eine echte Teilmenge der Aussendungen des Signals (120) eine Information über eine Abweichung der zwei Taktgeber des Datensenders (130) aufweist,
wobei der Datenempfänger (110) ausgebildet ist, um die Ermittlung des Umweltparameters (114) basierend auf der Abweichung der zwei Taktgeber des Datensenders (130) zu kalibrieren.

19. Datenempfänger (110) nach einem der vorangehenden Ansprüche,
wobei der Datenempfänger (110) ausgebildet ist, um ein weiteres Signal (120) von einem weiteren Datensender (130) zu empfangen, wobei das weitere Signal (120) oder eine Erzeugung des weiteren Signals (120) von einem Taktsignal (132) eines Taktgebers des weiteren Datensenders (130) abhängig ist,
wobei der Datensender (130) und der weitere Datensender (130) im Wesentlichen dem gleichem Umweltparameter ausgesetzt sind,
wobei der Datenempfänger (110) ausgebildet ist, um einen weiteren Signalparameter des weiteren Signals (120) zu ermitteln, und um den Umweltparameter basierend auf dem Signalparameter und dem weiteren Signalparameter zu ermitteln.

20. Datenempfänger (110) nach Anspruch 19,
wobei der Datenempfänger (110) ausgebildet ist, um den Signalparameter und den weiteren Signalparameter zu kombinieren, um einen kombinierten Signalparameter zu erhalten, und um den Umweltparameter basierend auf dem kombinierten Signalparameter zu ermitteln.

21. Datenempfänger (110) nach einem der vorangehenden Ansprüche,
wobei der Datenempfänger (110) ausgebildet ist, um einen altersbedingten Einfluss des Taktgebers (134) auf den Signalparameter zu kompensieren.

22. Datenempfänger (110) nach einem der vorangehenden Ansprüche,
wobei der Datenempfänger (110) ausgebildet ist, um einen exemplarstreuungsbedingten Einfluss des Taktgebers (134) auf den Signalparameter zu kompensieren.

23. System, mit folgenden Merkmalen:
einem Datenempfänger (110) nach einem Ansprüche 1 bis 22, und
einem Datensender,
wobei der Datensender (130) ausgebildet ist, um das Signal (120) zu senden, wobei das Signal (120) oder die Erzeugung des Signals (120) von dem Taktsignal (132) des Taktgebers (134) des Datensenders (130) abhängig ist.

24. Verfahren, mit folgenden Schritten:
Empfangen eines Signals (120) eines Datensenders (130), wobei das Signal (120) oder eine Erzeugung des Signals (120) von einem Taktsignal (132) eines Taktgebers (134) des Datensenders (130) abhängig ist.
Ermitteln eines Signalparameters (112) des empfangenen Signals,
Ermitteln eines Umweltparameters, dem der Taktgeber des Datensenders (130) oder das Signal (120) ausgesetzt ist, basierend auf dem ermittelten Signalparameter.

25. Computerprogramm zur Durchführung des Verfahrens gemäß einer der vorangehenden Ansprüche, wenn das Computerprogramm auf einem Computer oder Mikroprozessor abläuft.
